# EUROPEAN PATENT APPLICATION

(11) **EP 2 879 056 A1**
(43) Date of publication of application: **03.06.2015**
(21) Application number: 13822657.6
(22) Date of filing: 22.07.2013
(51) Int. Cl.: G06F 12/00

(54) **CONTENT ADMINISTRATION DEVICE, CONTENT ADMINISTRATION METHOD, AND CONTENT ADMINISTRATION PROGRAM**

(30) Priority: 27.07.2012 JP 2012166852
(71) Applicant: Sumitomo Electric Industries, Ltd., Osaka-shi, Osaka 541-0041 (JP); Sumitomo Electric Networks, Inc., Tokyo 141-0022 (JP)
(72) Inventor: KITAJIMA, Keiko, Osaka-shi Osaka 554-0024 (JP)
(74) Representative: Hoffmann Eitle
(86) International application number: PCT/JP2013/069823
(87) International publication number: WO 2014/017445

(57) **Abstract**

The present invention relates to a content management apparatus to which a plurality of storage devices are connectable. The content management apparatus includes: a selection section configured to select, from among a plurality of storage devices connected to the content management apparatus, a storage device as an aggregation destination to which identification information for identifying contents is aggregated; a management section configured to aggregate and store the identification information of the contents stored in the storage devices connected to the content management apparatus, into the storage device as the aggregation destination selected by the selection section; and a provision section configured to provide a content corresponding to information selected from the identification information stored in the storage device as the aggregation destination.

## Description

### TECHNICAL FIELD

The present invention relates to a content management apparatus, a content management method, and a content management program. More particularly, the invention relates to a content management apparatus, a content management method, and a content management program which are configured to provide a user with a content selected by the user from a plurality of storage devices.

### BACKGROUND ART

In recent years, there has been provided a technique in which domestic digital products such as a television receive, a PC (Personal Computer), a stereo, a home theater system, a game machine, and the like are connected via a home network, and contents are shared among the digital products. For example, DLNA (Digital Living Network Alliance) guidelines define: a DMS (Digital Media Server) that stores contents therein and distributes a content to a DMP (Digital Media Player) or a DMR (Digital Media Renderer) connected to a home network to allow the DMP or the DMR to reproduce the content; and a DMC (Digital Media Controller) that searches for a content stored in the DMS and transmits the content to the DMR to allow the DMR to display the content.

Meanwhile, there has been known an information management apparatus, that is, a NAS (Network Attached Storage), that can store a plurality of removable disks therein and exchange information with a DMP-compatible television receiver or a DMC-compatible PC via a network. For example, an information management apparatus includes removable disks, and a storage device management section that manages the removable disks. The storage device management section includes a storage device identification management section that manages the removable disks based on HDD names, and a storage content management section that manages contents stored in each removable disk such that the HDD names of the removable disks managed by the storage device identification management section are associated with contents stored in the removable disks (refer to Patent Literature 1, for example).

### CITATION LIST

### [PATENT LITERATURE]

PATENT LITERATURE 1: Japanese Laid-Open Patent Publication No. 2011-129217

### SUMMARY OF INVENTION

### [TECHNICAL PROBLEM]

According to the technique described in Patent Literature 1, however, when a user views a predetermined content, the user selects an HDD name corresponding to a removable disk in which the predetermined content is stored, from a list of HDD names displayed on a screen. When a list of contents stored in the selected removable disk is displayed on the screen, the user selects the desired content from the list.

That is, the user needs to previously know the removable disk in which the desired content is stored. If the user does not know the removable disk, the user needs to display, on the screen, the list of contents stored in each removable disk and search for the removable disk in which the desired content is stored.

The present invention has been made to solve the above problems, and it is an object of the present invention to provide a content management apparatus, a content management method, and a content management program which can smoothly provide a user with a content that the user desires, even when the user does not know a storage device in which the desired content is stored among a plurality of storage devices.

### [SOLUTION TO PROBLEM]

(1) In order to solve the above problem, a content management apparatus according to an aspect of the present invention is a content management apparatus to which a plurality of storage devices are connectable, and the apparatus includes: a selection section configured to select, from among a plurality of storage devices connected to the content management apparatus, a storage device as an aggregation destination to which identification information for identifying contents is aggregated; a management section configured to aggregate and store the identification information of the contents stored in the storage devices connected to the content management apparatus, into the storage device as the aggregation destination selected by the selection section; and a provision section configured to provide a content corresponding to information selected from the identification information stored in the storage device as the aggregation destination.
   The identification information is a database of the file names of the contents, the dates and times when the contents were stored in the corresponding storage devices, the file sizes of the contents, the genres of the contents, the creators of the contents, and the like.
   As described above, since the database of the contents stored in the plurality of storage devices is aggregated and stored in the storage device as the aggregation destination, even if a user does not know a storage device in which a desired content is stored among the plurality of storage devices, the user can select the desired content from the database stored in the storage device as the aggregation destination. Thus, it is possible to smoothly provide the user with the desired content.
(2) Preferably, the number of storage devices as aggregation destinations selected by the selection section is smaller than the number of the storage devices connected to the content management apparatus.
   As described above, since the identification information of the contents is aggregated and stored in some storage devices among the plurality of storage devices, it is possible to reduce the time required for the aggregation of the identification information, as compared to, for example, the case where the identification information of the contents is aggregated and stored in all the storage devices connected to the content management apparatus.
(3) Preferably, the selection section selects a storage device having a high data writing rate, as the storage device as the aggregation destination, from among the plurality of storage devices.
   According to the above configuration, the time required for the aggregation of the identification information of the contents can be further reduced.
(4) Preferably, the selection section selects a storage device having a large storage capacity, as the storage device as the aggregation destination, from among the plurality of storage devices.
   According to the above configuration, it is possible to prevent occurrence of an inconvenience that the identification information of the contents cannot be aggregated and stored because of insufficient storage capacity of the storage device as the aggregation destination. In addition, it is possible to prevent a situation that the identification information of the contents is aggregated and stored in a storage device having a small storage capacity and thereby the storage capacity of the storage device runs short.
(5) Preferably, the selection section newly selects a storage device as an aggregation destination when the content management apparatus is booted.
   According to the above configuration, an appropriate storage device as an aggregation destination can be selected when the content management apparatus is booted. If the content management apparatus is configured such that a storage device as an aggregation destination is selected every time a storage device is newly connected to the content management apparatus or a storage device that has been connected to the content management apparatus is disconnected, it is conceivable that the storage device as the aggregation destination is frequently changed and the aggregation of the identification information takes a long time. In contrast, since the above configuration enables selection of a storage device as an aggregation destination only when the content management apparatus is booted, it is possible to prevent the storage device as the aggregation destination from being frequently changed.
(6) Preferably, the content management apparatus further includes a priority assignment section configured to assign, to each of the plurality of storage devices, a priority rank indicating a rank at which the storage device is preferentially selected as the storage device as the aggregation destination, and form a priority list indicating the assigned priority ranks. The selection section selects the storage device as the aggregation destination based on the priority list.
   According to the above configuration, the selection section selects, for example, a storage device listed at the top of the priority list, as a storage device as an aggregation destination, and thus the selection section can easily select an appropriate storage device as a storage device as an aggregation destination.
(7) Preferably, after the formation of the priority list, if a storage device is newly connected to the content management apparatus, the priority assignment section assigns the lowest rank to the newly connected storage device, thereby to update the priority list based on a result of the assignment.
   According to the above configuration, even when a storage device is newly connected, the storage device is not selected as a storage device as an aggregation destination, immediately after it is connected. Thus, it is possible to prevent the storage device as the aggregation destination from being frequently changed.
(8) Preferably, after the formation of the priority list, if a storage device that has been connected to the content management apparatus is disconnected, the priority assignment section deletes the disconnected storage device from the priority list, thereby to update the priority list.
   According to the above configuration, it is possible to prevent the disconnected storage device from being selected as a storage device as an aggregation destination.
(9) Preferably, when the content management apparatus is booted, the priority assignment section again performs assignment of priority ranks, thereby to update the priority list. The selection section again selects a storage device as an aggregation destination based on the updated priority list.
   According to the above configuration, it is possible to easily select an appropriate storage device as an aggregation destination when the content management apparatus is booted. In addition, the above configuration allows selection of a storage device as an aggregation destination only when the content management apparatus is booted. Thus, it is possible to prevent the storage device as the aggregation destination from being frequently changed.
(10) In order to solve the above problem, a content management method according to an aspect of the present invention is a content management method used in a content management apparatus that provides contents, and the method includes the steps of: selecting, from among a plurality of storage devices connected to the content management apparatus, a storage device as an aggregation destination to which identification information for identifying contents is aggregated; aggregating and storing the identification information of the contents stored in the storage devices connected to the content management apparatus, into the storage device selected as the aggregation destination; and providing a content corresponding to information selected from the identification information stored in the storage device as the aggregation destination.
   As described above, since the database of the contents stored in the plurality of storage devices is aggregated and stored in the storage device as the aggregation destination, even if a user does not know the storage device in which a desired content is stored among the plurality of storage devices, the user can select the desired content from the database stored in the storage device as the aggregation destination. Thus, it is possible to smoothly provide the user with the desired content.
(11) In order to solve the above problem, a content management program according to an aspect of the present invention is a content management program used in a content management apparatus that provides contents, and the program causes a computer to execute the steps of: selecting, from among a plurality of storage devices connected to the content management apparatus, a storage device as an aggregation destination to which identification information for identifying contents is aggregated; aggregating and storing the identification information of the contents stored in the storage devices connected to the content management apparatus, into the storage device selected as the aggregation destination; and providing a content corresponding to information selected from the identification information stored in the storage device as the aggregation destination.

As described above, since the database of the contents stored in the plurality of storage devices is aggregated and stored in the storage device as the aggregation destination, even if a user does not know the storage device in which a desired content is stored among the plurality of storage devices, the user can select the desired content from the database stored in the storage device as the aggregation destination. Thus, it is possible to smoothly provide the user with the desired content.

### [ADVANTAGEOUS EFFECTS OF INVENTION]

According to the present invention, even when a user does not know a storage device in which a desired content is stored among a plurality of storage devices, it is possible to smoothly provide the user with the desired content.

### BRIEF DESCRIPTION OF DRAWINGS

[FIG. 1] FIG. 1 is a diagram showing a configuration of a content management system including a content management apparatus according to an embodiment of the present invention.
[FIG. 2] FIG. 2 is a diagram showing, in detail, a configuration of the content management apparatus according to the embodiment of the present invention.
[FIG. 3] FIG. 3 is a flowchart showing a flow of a selection process of selecting a storage device as a content aggregation destination, performed by the content management apparatus according to the embodiment of the present invention.
[FIG. 4] FIG. 4 is a diagram showing information relating to storage devices connected to the content management apparatus according to the embodiment of the present invention.
[FIG. 5] FIG. 5 is a diagram showing an example of a priority list in a case where the storage devices shown in FIG. 4 are connected to the content management apparatus according to the embodiment of the present invention.
[FIG. 6] FIG. 6 is a flowchart showing a flow of a rearrangement process by a priority assignment section of the content management apparatus according to the embodiment of the present invention.
[FIG. 7] FIG. 7 is a flowchart showing a flow of a content provision process by a provision section of the content management apparatus according to the embodiment of the present invention.
[FIG. 8] FIG. 8 is a diagram showing an example of a content list displayed on a display screen of a television receiver or a PC.

### DESCRIPTION OF EMBODIMENTS

Hereinafter, an embodiment of the present invention will be described with reference to the drawings. In the drawings, the same or corresponding parts are denoted by the same reference numerals, and will not be repeatedly described.

### [Configuration and fundamental operation]

### (a) Entire configuration of content management system

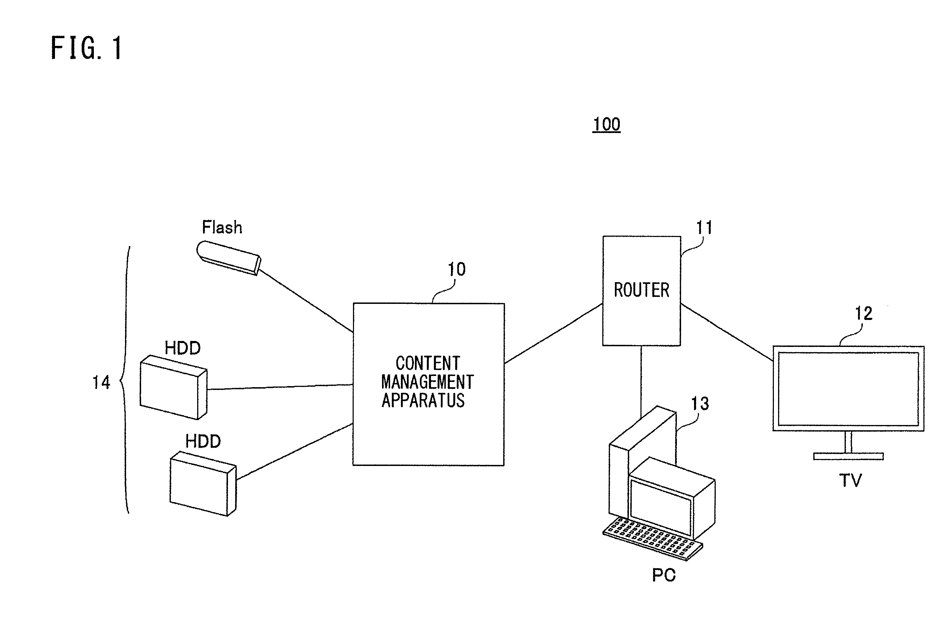

FIG. 1 is a diagram showing a configuration of a content management system including a content management apparatus according to the embodiment of the present invention.

With reference to FIG. 1, a content management system 100 includes a content management apparatus 10, a router 11, a television receiver (TV) 12, a PC 13, and storage devices 14.

The content management apparatus 10 is connected to the television receiver 12 or the PC 13, which is domestic digital equipment, via the router 11, and manages the domestic digital equipment. In addition, the content management apparatus 10 includes USB ports to which one or a plurality of storage devices 14 can be connected. The content management apparatus 10 transmits, to the television receiver 12, the PC 13, or the like, a content selected by a user from among contents stored in storage device(s) 14 connected thereto, thereby providing the user with the content.

Each storage device 14 is a removable disk such as a hard disk (HDD) or a flash memory (Flash) that stores one or a plurality of contents, and is attachable to and detachable from the content management apparatus 10.

### (b) Detailed configuration of content management apparatus

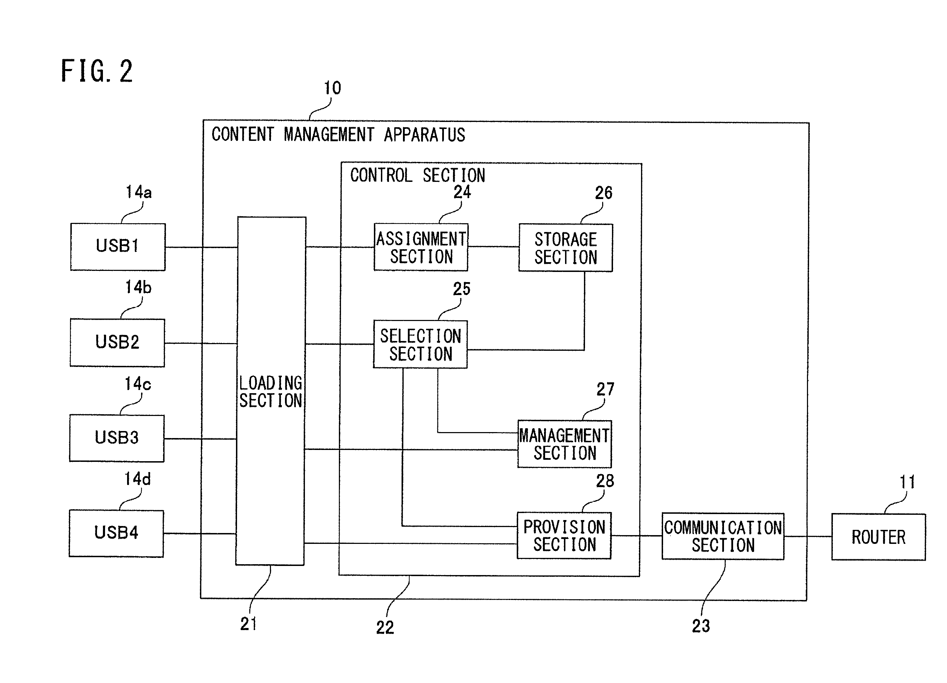

FIG. 2 is a diagram showing, in detail, the configuration of the content management apparatus according to the embodiment of the present invention.

With reference to FIG. 2, the content management apparatus 10 includes a loading section 21, a control section 22, and a communication section 23. The control section 22 includes a priority assignment section 24, a selection section 25, a storage section 26, a management section 27, and a provision section 28.

The loading section 21 is used for loading removable disks such as the storage devices 14 to the content management apparatus 10. The loading section 21 recognizes each storage device 14 connected thereto, and acquires, from the storage device 14, information indicating, for example, the name of the storage device 14 or the storage capacity of the storage device 14.

The communication section 23 is connected to the router 11, and performs communication with the digital equipment such as the television receiver 12 or the PC 13 via the router 11. For example, when the user selects a desired content on the television receiver 12 or the PC 13, the communication section 23 acquires information indicating the desired content from the television receiver 12 or the PC 13, and outputs the acquired information to the control section 22. When the desired content is output from the control section 22, the communication section 23 transmits the desired content to the television receiver 12 or the PC 13.

The priority assignment section 24 assigns, to each of the plurality of storage devices 14 connected to the content management apparatus 10, a priority rank indicating a rank at which the storage device 14 is preferentially selected as a storage device as an aggregation destination to which identification information of contents is aggregated. Then, the priority assignment section 24 creates a priority list showing the assigned priority ranks. When a storage device 14 is newly connected to the content management apparatus 10, the priority assignment section 24 assigns the lowest rank to the newly connected storage device 14, thereby updating the priority list.

When a storage device 14 that has been connected to the content management apparatus 10 is disconnected, the priority assignment section 24 deletes the disconnected storage device 14 from the priority list, thereby updating the priority list. When the content management apparatus 10 is booted, the priority assignment section 24 performs assignment of priority ranks again to rearrange the storage devices 14 listed on the priority list, thereby updating the priority list.

The selection section 25 selects a storage device as an aggregation destination to which identification information of contents is aggregated, from among the plurality of storage devices 14 connected to the content management apparatus 10. For example, the selection section 25 selects, as a storage device as an aggregation destination, a storage device 14 listed at the top of the priority list created by the priority assignment section 24. Alternatively, the selection section 25 may acquire information relating to the storage devices 14 directly from the loading section 21, and select a storage device as an aggregation destination based on the acquired information. Then, the selection section 25 outputs information indicating the storage device selected as the aggregation destination, that is, aggregation destination information, to the management section 27 and the provision section 28.

The storage section 26 stores therein a file of the priority list created by the priority assignment section 24, and the like.

The management section 27 acquires the aggregation destination information from the selection section 25, and specifies a storage device as an aggregation destination, based on the acquired aggregation destination information. Then, the management section 27 causes the storage device as the aggregation destination to store therein identification information relating to all the contents stored in the plurality of storage devices 14 (hereinafter, this process is also referred to as "aggregation").

The identification information is a database of the file names of the contents, the dates and times when the contents were stored in the corresponding storage devices, the file sizes of the contents, the genres of the contents, the creators of the contents, and the like.

Further, as for all the contents stored in the plurality of storage devices 14, the management section 27 causes the storage device as the aggregation destination to store therein a drive name and a folder name indicating the storage area of each content, that is, a pathname.

Further, the user can previously perform, for a specific content, setting such that the identification information and the pathname of the specific content are not stored in the storage device as the aggregation destination. In this case, the management section 27 performs aggregation of the identification information and the pathnames of the contents, excluding the content on which such setting has been made.

The provision section 28 acquires the aggregation destination information from the selection section 25, and specifies the storage device as the aggregation destination based on the acquired aggregation destination information. Then, the provision section 28 transmits, via the communication section 23, a list of content identification information stored in the storage device as the aggregation destination, that is, a content list, to the television receiver 12 or the PC 13. Thus, the content list is displayed on the display screen of the television receiver 12 or the PC 13. Then, the user can select a desired content from the content list by referring to the content list indicating, for example, a list of the file names of the contents.

When the user selects the desired content from the content list, the provision section 28 acquires a selection result indicating the desired content from the television receiver 12 or the PC 13. Then, the provision section 28 refers to the pathnames of the contents, stored in the storage device as the aggregation destination, and specifies the storage area of the desired content corresponding to the selection result. Then, the provision section 28 acquires the desired content from the specified storage area, and transmits the desired content to the television receiver 12 or the PC 13 via the communication section 23 and the router 11.

### [Operation]

Hereinafter, an operation of the content management system 100 including the content management apparatus 10 according to the embodiment of the present invention will be described. The operation is divided into "aggregation destination selection process", "rearrangement process", and "content provision process".

### (a) Aggregation destination selection process

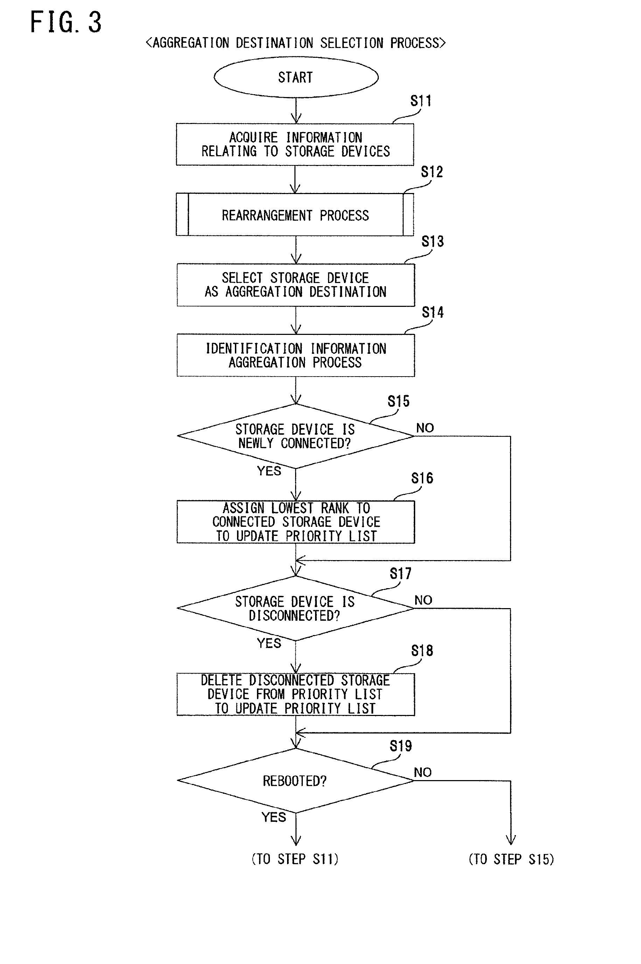

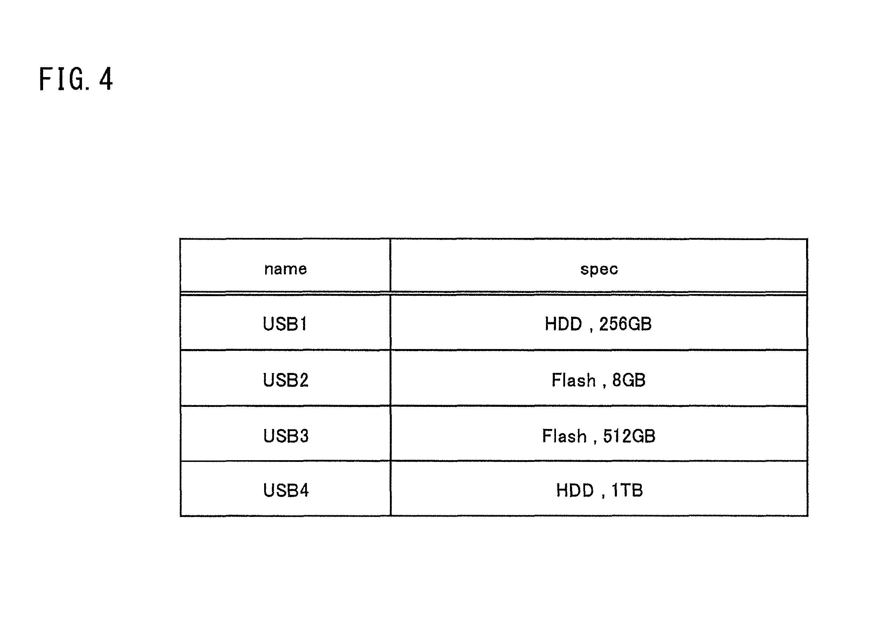

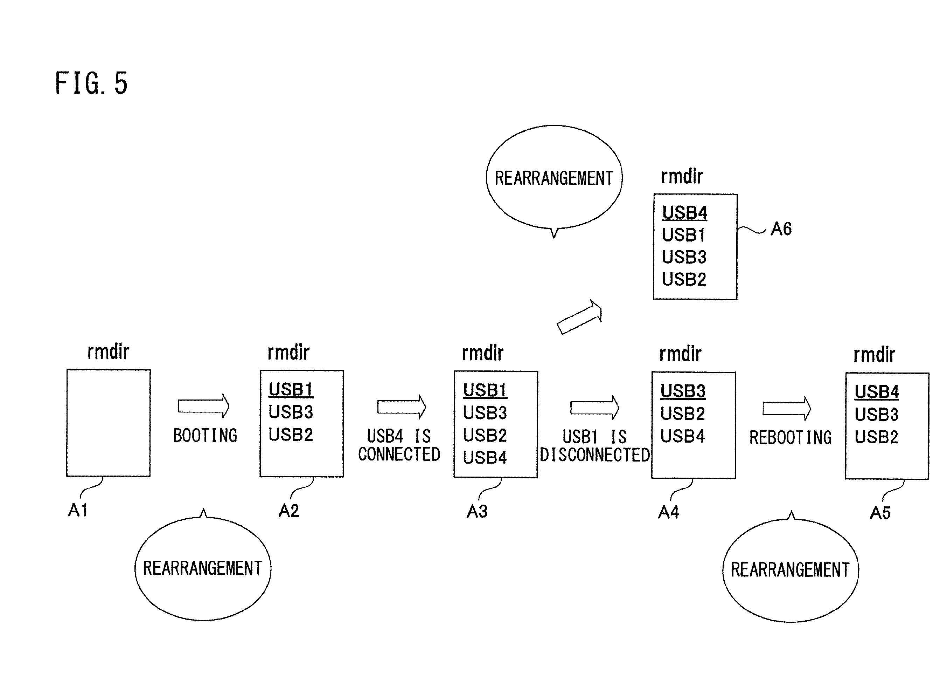

FIG. 3 is a flowchart showing a flow of a selection process of selecting a storage device as a content aggregation destination, by the content management apparatus according to the embodiment of the present invention. FIG. 4 is a diagram showing information relating to storage devices connected to the content management apparatus according to the embodiment of the present invention. FIG. 5 is a diagram showing an example of a priority list in a case where the storage devices shown in FIG. 4 are connected to the content management apparatus according to the embodiment of the present invention.

With reference to FIG. 3, first, when the content management apparatus 10 is booted, the loading section 21 of the content management apparatus 10 acquires, from each of the storage devices 14 connected thereto, information indicating the performance and the like of the storage device 14. Then, the loading section 21 outputs the acquired information to the priority assignment section 24.

For example, with reference to FIG. 4, it is assumed that four storage devices 14a, 14b, 14c, and 14d are connected to the content management apparatus 10, the name of the storage device 14a is "USB1", the name of the storage device 14b is "USB2", the name of the storage device 14c is "USB3", and the name of the storage device 14b is "USB4". In addition, it is assumed that the storage device 14a is a hard disk (HDD) having a storage capacity of 256 GB, the storage device 14b is a flash memory (Flash) having a storage capacity of 8 GB, the storage device 14c is a flash memory (Flash) having a storage capacity of 512 GB, and the storage device 14d is a hard disk (HDD) having a storage capacity of 1 TB.

In this case, for example, the loading section 21 acquires the names of the storage devices 14, information indicating whether each storage device 14 is a hard disk or a flash memory, and the storage capacities of the storage devices 14, and outputs the acquired information to the priority assignment section 24 (step S11).

When acquiring the information relating to the storage devices 14, the priority assignment section 24 assigns, based on the information, to each of the storage devices 14, a priority rank indicating a rank at which the storage device 14 is preferentially selected as an aggregation destination to which identification information of contents is aggregated. For example, the priority assignment section 24 assigns the higher rank to a storage device having the higher data writing rate or a storage device having the larger storage capacity. Then, the priority assignment section 24 creates a priority list in which the storage devices 14a, 14b, 14c, and 14d are listed in descending order of their priority ranks, and causes the storage section 26 to store the list therein (rearrangement process).

For example, with reference to FIGS. 4 and 5, in the situation where a file A1 is stored in the storage section 26, when the content management apparatus 10 is booted and the USB1, the USB2, and the USB3 are connected to the content management apparatus 10, the USB1, the USB2, and the USB3 are added to the file A1.

At this time, based on the acquired information relating to the USB1, the USB2, and the USB3, the priority assignment section 24 assigns priority ranks to the USB1, the USB2, and the USB3. When the priority ranks are assigned in order of the USB1, the USB3, and the USB2, the priority assignment section 24 adds, to the file A1, the USB1, the USB3, and the USB2 in descending order of the priority ranks. Thus creates file A2 is stored as a priority list in the storage section 26 (step S12). The details of the rearrangement process, such as the criteria of assigning the priority ranks, will be described later.

Referring back to FIG. 3, next, the selection section 25 refers to the latest priority list stored in the storage section 26, and selects the storage device 14 at the top of the list, as a storage device as an aggregation destination of identification information. For example, in the example shown in FIG. 5, when the file A2 is stored as the latest priority list in the storage section 26, the selection section 25 selects the USB1 as a storage device as an aggregation destination (step S 13).

The selection section 25 may selects two or more storage devices 14 as storage devices as aggregation destinations. For example, in the example shown in FIG. 5, among the storage devices 14 recorded in the file A2, the selection section 25 may select the USB1 at the top and the second USB3 as storage devices as aggregation destinations. However, while performing aggregation of the identification information to the storage device as the aggregation destination, the content management apparatus 10 cannot provide the user with contents. Therefore, in order to prevent the aggregation from taking a long time, the number of storage devices to be selected as aggregation destinations is preferably smaller than the number of the storage devices 14 connected to the content management apparatus 10.

Next, the management section 27 acquires, from the selection section 25, aggregation destination information indicating information of the storage device as the aggregation destination, and specifies the storage device 14 selected as the aggregation destination, based on the aggregation destination information. Then, the management section 27 aggregates identification information of all the contents stored in the plurality of storage devices 14 connected to the content management apparatus 10, and causes the specified storage device 14 to store the identification information therein.

Thus, the identification information of all the contents stored in the plurality of storage devices 14 is stored in the storage device as the aggregation destination (step S 14).

Next, the priority assignment section 24 determines whether or not a storage device 14 is newly connected to the loading section 21 of the content management apparatus 10 (step S15).

When a storage device 14 is newly connected (YES in step S 15), the priority assignment section 24 assigns the lowest priority rank to the newly connected storage device 14, thereby updating the priority list.

That is, in the example shown in FIG. 5, when the USB4 is newly connected to the content management apparatus 10 under the situation where the file A2 is stored in the storage section 26, the priority assignment section 24 assigns the lowest priority rank to the USB4. Then, the priority list, i.e., the file A2, stored in the storage section 26 is updated, and thereby a file A3 in which the USB4 is listed at the bottom is stored as the updated priority list in the storage section 26 (step S16).

After determining whether or not a storage device 14 is newly connected (step S15), the priority assignment section 24 determines whether or not a storage device 14 that has been connected to the content management apparatus 10 is disconnected (step S17).

When there is a storage device 14 disconnected from the content management apparatus 10 (YES in step S17), the priority assignment section 24 deletes the disconnected storage device 14 from the priority list stored in the storage section 26, thereby updating the priority list (step S18).

That is, in the example shown in FIG. 5, under the situation where the file A3 is stored in the storage section 26, if the USB1 is pulled out from the content management apparatus 10 and thereby disconnected from the content management apparatus 10, the priority assignment section 24 deletes the USB1 from the file A3. Thus, the priority list, namely, the file A3 stored in the storage section 26 is updated, and thereby a file A4 is stored in the storage section 26 as the updated priority list.

After determining whether or not a storage device 14 that has been connected to the content management apparatus 10 is disconnected (step S17), the content management apparatus 10 determines whether or not the content management apparatus 10 is rebooted (step S19).

When the content management apparatus 10 is rebooted (YES in step S 19), the content management apparatus 10 returns to step S11, and performs acquisition of information relating to the storage devices 14 (step S11) and the rearrangement process (step S12), followed by repetition of the above-described operation.

That is, in the example shown in FIG. 5, when the content management apparatus 10 is rebooted under the situation where the file A4 is stored in the storage section 26, the priority assignment section 24 acquires information relating to the storage devices 14. At this time, for example, the priority assignment section 24 has already acquired the information relating to the USB2 and the USB3. Therefore, the priority assignment section 24 acquires information relating to the USB4 newly connected to the content management apparatus 10.

Then, based on the acquired information, the priority assignment section 24 assigns priority ranks to the USB2, the USB3, and the USB4. When the priority ranks are assigned, for example, in order of the USB4, the USB3, and the USB2, a priority list in which the storage devices 14 are listed in descending order of the priority ranks is created as a file A5 and stored in the storage section 26.

On the other hand, when no storage device 14 is disconnected from the content management apparatus 10 under the situation where the file A3 is stored in the storage section 26 and the content management apparatus 10 is rebooted, the priority assignment section 24 acquires the information relating to the USB4 newly connected to the content management apparatus 10 in the same manner as described above.

Then, based on the acquired information, the priority assignment section 24 assigns priority ranks to the USB1, the USB2, the USB3, and the USB4 connected to the content management apparatus 10. If the priority ranks are assigned, for example, in order of the USB4, the USB1, the USB3, and the USB2, a priority list in which the storage devices 14 are listed in descending order of the priority ranks is created as a file A6 and stored in the storage section 26.

Then, the selection section 25 selects, as a storage device as an aggregation destination, the USB4 that is the storage device 14 listed at the top among the storage devices 14 listed in the file A5 or the file A6 as the priority list. Then, the management section 27 aggregates identification information of the contents stored in the plurality of storage devices 14 connected to the content management apparatus 10, and causes the selected USB4 to store the identification information therein.

There may be a case where the storage device 14 newly selected as a storage device as an aggregation destination by the selection section 25 is the same as the storage device 14 that has already been selected as a storage device as an aggregation destination, and aggregation of identification information to the storage device 14 has already been performed. In such a case, the management section 27 can omit the aggregation of the identification information to the storage device 14.

Referring back to FIG. 3, when the content management apparatus 10 is not rebooted (NO in step S 19), the content management apparatus 10 goes to step S 15 without performing acquisition of information relating to the storage devices 14 (step S11), rearrangement (step S12), selection of a storage device as an aggregation destination (step S13), and content aggregation (step S 14), followed by repetition of the above-described operation.

### (b) Rearrangement process

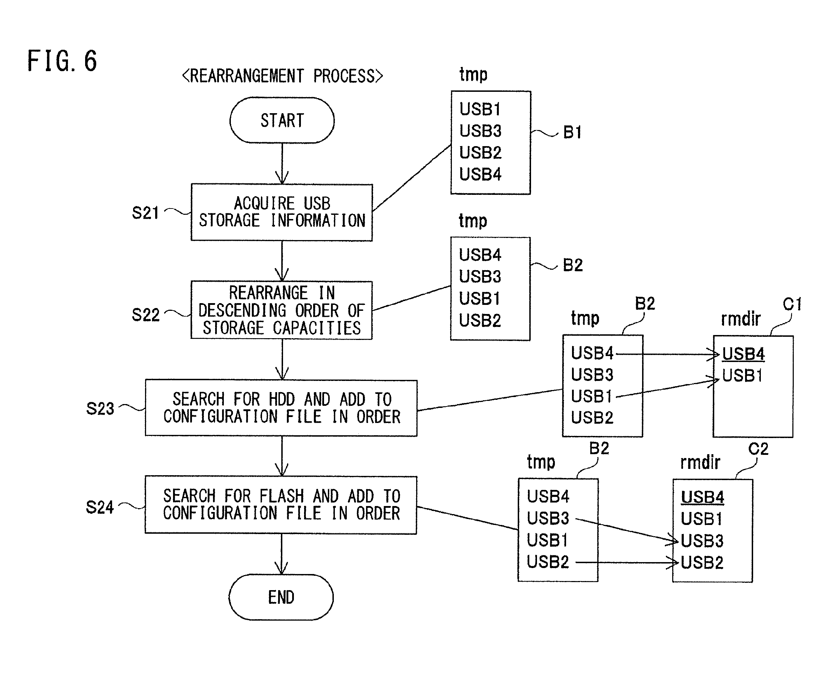

FIG. 6 is a flowchart showing a flow of the rearrangement process by the priority assignment section of the content management apparatus according to the embodiment of the present invention.

With reference to FIG. 6, first, the priority assignment section 24 of the content management apparatus 10 acquires, from the loading section 21, information relating to the storage devices 14 connected to the loading section 21. For example, when the USB1, the USB2, the USB3, and the USB4 shown in FIG. 4 are connected to the loading section 21, the priority assignment section 24 acquires information indicating the storage capacities of the USB1, the USB2, the USB3, and the USB4 and information as to whether each of the USB1, the USB2, the USB3, and the USB4 is a hard disk or a flash memory (USB storage information) (step S21). In addition, the priority assignment section 24 records the USB1, the USB2, the USB3, and the USB4 in order in a file B1 stored in the storage section 26.

Next, based on the USB storage information acquired in step S21, the priority assignment section 24 rearranges the USB1, the USB2, the USB3, and the USB4 recorded in the file B1, in descending order of the storage capacities. That is, the priority assignment section 24 creates a file B2 in which the USBs are rearranged in order of the USB4 having a storage capacity of 1 TB, the USB3 having a storage capacity of 512 GB, the USB1 having a storage capacity of 256 GB, and the USB2 having a storage capacity of 8 GB, and causes the storage section 26 to store the file B2 therein (step S22).

Next, based on the USB storage information acquired in step S21, the priority assignment section 24 searches for a hard disk from among the USB1, the USB2, the USB3, and the USB4 recorded in the file B2, and stores the searched hard disk in a file C1 stored in the storage section 26.

For example, as shown in FIG. 4, since the USB1 and the USB4 are hard disks, the priority assignment section 24 records the USB1 and the USB4 in the file C1. At this time, since the USB4 is recorded above the USB1 in the file B2, the priority assignment section 24 stores the USB4 and the USB1 in this order in the file C1 (step S23).

Next, based on the USB storage information acquired in step S21, the priority assignment section 24 searches for a flash memory from among the USB1, the USB2, the USB3, and the USB4 recorded in the file B2, and adds the searched flash memory to the file C1, thereby forming a file C2.

For example, as shown in FIG. 4, since the USB2 and the USB3 are flash memories, the priority assignment section 24 places the USB2 and the USB3 under the USB4 and the USB1 in the file C1. At this time, since the USB3 is recorded above USB2 in the file B2, the priority assignment section 24 adds the USB3 and the USB1 in this order in the file C1, thereby forming the file C2.

Thus formed file C2 corresponds to the priority list, and the selection section 25 selects the USB4 listed at the top of the priority list, as a storage device as an aggregation destination.

In the embodiment of the present invention, the priority assignment section 24 performs rearrangement of the storage devices 14 such that a higher priority rank is assigned to a storage device having a larger storage capacity, and further, a hard disk, which has a data writing rate relatively higher than that of a flash memory, is preferentially selected as a storage device as an aggregation destination. However, the present invention is not limited to the embodiment, and the priority assignment section 24 may perform rearrangement of the plurality of storage devices 14 according to other criteria.

For example, the priority assignment section 24 may rearrange the storage devices 14 in descending order of free spaces, or in chronological order in which the storage devices 14 have been connected, that is, in descending order of durations of connection with the content management apparatus 10, i.e., ascending order of possibilities of disconnection from the content management apparatus 10. Alternatively, the rearrangement process may be performed in combination of the above-described criteria.

Further, the selection section 25 may select, from among the plurality of storage devices 14, a storage device which is a hard disk or a storage device having a large storage capacity, as a storage device as an aggregation destination. Alternatively, the selection section 25 may select a storage device connected to a predetermined port in the content management apparatus 10, as a storage device as an aggregation destination.

Further, the selection section 25 may include, in the options for a storage device as an aggregation destination, not only the storage devices 14 connected to the content management apparatus 10 but also the storage section 26 included in the content management apparatus 10, and may select the storage section 26 as a storage device as an aggregation destination. Alternatively, a special storage device for aggregating and storing therein identification information of contents may be connected to the content management apparatus 10, and the selection section 25 may select the special storage device as a storage device as an aggregation destination.

### (c) Content provision process

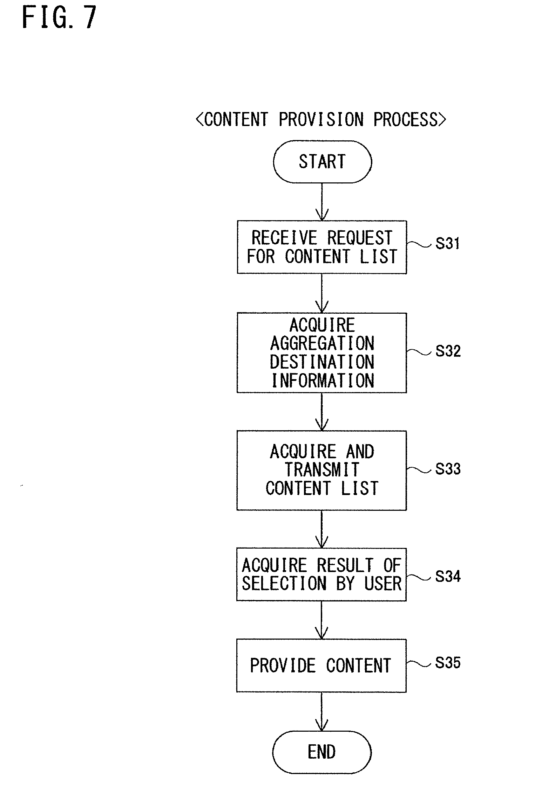

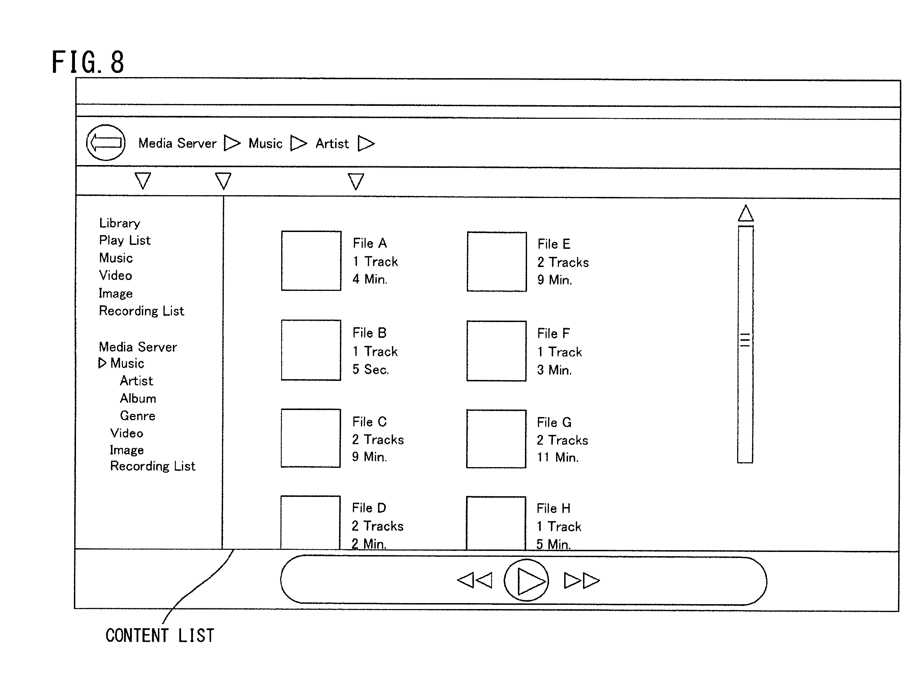

FIG. 7 is a flowchart showing a flow of the content provision process by the provision section of the content management apparatus according to the embodiment of the present invention. FIG. 8 is a diagram showing an example of a content list displayed on the display screen of the television receiver or the PC.

With reference to FIG. 7, first, when the content management apparatus 10 is booted and a user transmits a request for a content list via the television receiver 12 or the PC 13, the provision section 28 of the content management apparatus 10 receives the request for the content list (step S31).

Next, the provision section 28 acquires, from the selection section 25, information indicating the storage device 14 selected as a storage device as an aggregation destination by the selection section 25, namely, the aggregation destination information (step S32).

Next, the provision section 28 acquires the content list which is a list of identification information stored in the storage device as an aggregation destination, in other words, the database indicating identification information relating to all the contents stored in the plurality of storage devices 14. Then, the provision section 28 transmits the acquired content list to the television receiver 12 or the PC 13 via the communication section 23 and the router 11 (step S33). Thereby, a content list as shown in FIG. 8 is displayed on the display screen of the television receiver 12 or the PC 13.

The provision section 28 can transmit a content list in which identification information is arranged in various orders. For example, in response to a request from the user, the provision section 28 can transmit a content list in which identification information is arranged and displayed in alphabetical order of file names of contents, in chronological order of storage to the storage device 14, or in descending order of the file sizes. Further, the provision section 28 can also transmit a content list in which the contents are sorted by genres or creators thereof, and displayed.

Next, when the user selects a desired content from the content list displayed on the display screen of the television receiver 12 or the PC 13, the provision section 28 acquires a selection result indicating the desired content (step S34).

Next, the provision section 28 refers to the pathnames of the contents which are stored in the storage device as the aggregation destination, and specifies a storage area of the desired content based on the acquired selection result. Then, the provision section 28 acquires the desired content from the specified storage area, and transmits the acquired content to television receiver 12 or the PC 13 via the communication section 23 and the router 11, thereby providing the user with the content (step S35).

The content management according to the present invention is not limited to be performed by the content management apparatus 10 according to the above embodiment, and may be performed by an apparatus such as a home gateway which provides the user with contents.

By the way, according to the technique described in Patent Literature 1, when a user views a predetermined content, the user selects an HDD name corresponding to a removable disk in which the predetermined content is stored, from a list of HDD names displayed on the screen. When a list of contents stored in the selected removable disk is displayed on the screen, the user selects the desired content from the list.

That is, the user needs to previously know the removable disk in which the desired content is stored. If the user does not previously know the removable disk, the user needs to display, on the screen, the list of contents stored in each removable disk and search for the removable disk in which the desired content is stored.

In contrast, in the content management apparatus 10 according to the embodiment of the present invention, the selection section 25 selects a storage device as an aggregation destination to which identification information allowing identification of contents is aggregated, from among a plurality of storage devices 14 connected to the content management apparatus 10. In addition, the management section 27 aggregates and stores the identification information of the contents stored in the storage devices 14 connected to the content management apparatus 10, into the storage device as the aggregation destination selected by the selection section 25. Further, the provision section 28 provides a content corresponding to information selected from the identification information stored in the storage device as the aggregation destination.

As described above, since the database of the contents stored in the plurality of storage devices 14 is aggregated and stored in the storage device as the aggregation destination, even if the user does not know the storage device in which the desired content is stored among the plurality of storage devices 14, the user can select the desired content from the database stored in the storage device as the aggregation destination. Thus, it is possible to smoothly provide the user with the desired content.

In the content management apparatus 10 according to the embodiment of the present invention, the number of storage devices to be selected as aggregation destinations by the selection section 25 is smaller than the number of the storage devices 14 connected to the content management apparatus 10.

As described above, since the identification information of the contents is aggregated and stored in some storage devices 14 among the plurality of storage devices 14, it is possible to reduce the time required for the aggregation of the identification information, as compared to, for example, the case where the identification information of the contents is aggregated and stored in all the storage devices 14 connected to the content management apparatus 10.

In the content management apparatus 10 according to the embodiment of the present invention, the selection section 25 selects, as a storage device as an aggregation destination, a storage device having a high data writing rate from among the plurality of storage devices 14 connected to the content management apparatus 10.

According to the above configuration, the time required for the aggregation of the identification information of the contents can be further reduced.

In the content management apparatus 10 according to the embodiment of the present invention, the selection section 25 selects, as a storage device as an aggregation destination, a storage device having a large storage capacity from among the plurality of storage devices 14 connected to the content management apparatus 10.

According to the above configuration, it is possible to prevent occurrence of an inconvenience that the identification information of the contents cannot be aggregated and stored because of insufficient storage capacity of the storage device as the aggregation destination. In addition, it is possible to prevent a situation that the identification information of the contents is aggregated and stored in a storage device having a small storage capacity and thereby the storage capacity of the storage device runs short.

In the content management apparatus 10 according to the embodiment of the present invention, the selection section 25 newly selects a storage device as an aggregation destination only when the content management apparatus 10 is booted.

According to the above configuration, an appropriate storage device as an aggregation destination can be selected when the content management apparatus 10 is booted. If the content management apparatus 10 is configured such that a storage device as an aggregation destination is selected every time a storage device 14 is newly connected to the content management apparatus 10 or a storage device 14 that has been connected to the content management apparatus 10 is disconnected, it is conceivable that the storage device as the aggregation destination is frequently changed and the aggregation of the identification information takes a long time. In contrast, since the above configuration enables selection of a storage device as an aggregation destination only when the content management apparatus 10 is booted, it is possible to prevent the storage device as the aggregation destination from being frequently changed.

In the content management apparatus 10 according to the embodiment of the present invention, the priority assignment section 24 assigns, to each of the plurality of storage devices 14 connected to the content management apparatus 10, a priority rank indicating a rank at which the storage device 14 is preferentially selected as a storage device as an aggregation destination, and creates a priority list showing the assigned priority ranks. In addition, the selection section 25 selects a storage device as an aggregation destination, based on the priority list created by the priority assignment section 24.

According to the above configuration, the selection section 25 selects, for example, a storage device 14 listed at the top of the priority list, as a storage device as an aggregation destination, and thus the selection section 25 can easily select an appropriate storage device as a storage device as an aggregation destination.

In the content management apparatus 10 according to the embodiment of the present invention, after the formation of the priority list, if a storage device 14 is newly connected to the content management apparatus 10, the priority assignment section 24 assigns the lowest rank to the newly connected storage device 14, thereby updating the priority list stored in the storage section 26.

According to the above configuration, even when a storage device 14 is newly connected, the storage device 14 is not selected as a storage device as an aggregation destination, immediately after it is connected. Thus, it is possible to prevent the storage device as the aggregation destination from being frequently changed.

In the content management apparatus 10 according to the embodiment of the present invention, after the formation of the priority list, if a storage device 14 that has been connected to the content management apparatus 10 is disconnected, the priority assignment section 24 deletes the disconnected storage device 14 from the priority list, thereby updating the priority list.

According to the above configuration, it is possible to prevent the disconnected storage device 14 from being selected as a storage device as an aggregation destination.

In the content management apparatus 10 according to the embodiment of the present invention, the priority assignment section 24 again performs assignment of priority ranks when the content management apparatus 10 is booted to update the priority list. In addition, the selection section 25 again selects a storage device as an aggregation destination, based on the updated priority list.

According to the above configuration, it is possible to easily select an appropriate storage device as an aggregation destination when the content management apparatus 10 is booted. In addition, the above configuration allows selection of a storage device as an aggregation destination only when the content management apparatus 10 is booted. Thus, it is possible to prevent the storage device as the aggregation destination from being frequently changed.

The embodiment disclosed herein is merely illustrative in all aspects and should not be recognized as being restrictive. The scope of the present invention is defined by the scope of the claims rather than by the meaning described above, and is intended to include meaning equivalent to the scope of the claims and all modifications within the scope.

### REFERENCE SIGNS LIST

- 10: content management apparatus
- 11: router
- 12: television receiver
- 13: PC
- 14, 14a, 14b, 14c, 14d: storage device
- 21: loading section
- 22: control section
- 23: communication section
- 24: priority assignment section
- 25: selection section
- 26: storage section
- 27: management section
- 28: provision section

## Claims

1. A content management apparatus to which a plurality of storage devices are connectable, comprising:
a selection section configured to select, from among a plurality of storage devices connected to the content management apparatus, a storage device as an aggregation destination to which identification information allowing identification of contents is aggregated;
a management section configured to aggregate and store the identification information of the contents stored in the storage devices connected to the content management apparatus, into the storage device as the aggregation destination selected by the selection section; and
a provision section configured to provide a content corresponding to information selected from the identification information stored in the storage device as the aggregation destination.

2. The content management apparatus according to claim 1, wherein the number of storage devices as aggregation destinations selected by the selection section is smaller than the number of the storage devices connected to the content management apparatus.

3. The content management apparatus according to claim 1 or 2, wherein the selection section selects a storage device having a high data writing rate, as the storage device as the aggregation destination, from among the plurality of storage devices.

4. The content management apparatus according to any one of claims 1 to 3, wherein the selection section selects a storage device having a large storage capacity, as the storage device as the aggregation destination, from among the plurality of storage devices.

5. The content management apparatus according to any one of claims 1 to 4, wherein the selection section newly selects a storage device as an aggregation destination when the content management apparatus is booted.

6. The content management apparatus according to any one of claims 1 to 5 further including
a priority assignment section configured to assign, to each of the plurality of storage devices, a priority rank indicating a rank at which the storage device is preferentially selected as the storage device as the aggregation destination, and form a priority list indicating the assigned priority ranks, wherein
the selection section selects the storage device as the aggregation destination based on the priority list.

7. The content management apparatus according to claim 6, wherein
after the formation of the priority list, if a storage device is newly connected to the content management apparatus, the priority assignment section assigns the lowest rank to the newly connected storage device, thereby to update the priority list based on a result of the assignment.

8. The content management apparatus according to claim 6 or 7, wherein
after the formation of the priority list, if a storage device that has been connected to the content management apparatus is disconnected, the priority assignment section deletes the disconnected storage device from the priority list, thereby to update the priority list.

9. The content management apparatus according to any one of claims 6 to 8, wherein
when the content management apparatus is booted, the priority assignment section again performs assignment of priority ranks, thereby to update the priority list, and
the selection section again selects a storage device as an aggregation destination based on the updated priority list.

10. A content management method used in a content management apparatus that provides contents, the method comprising the steps of:
selecting, from among a plurality of storage devices connected to the content management apparatus, a storage device as an aggregation destination to which identification information for identifying contents is aggregated;
aggregating and storing the identification information of the contents stored in the storage devices connected to the content management apparatus, into the storage device selected as the aggregation destination; and
providing a content corresponding to information selected from the identification information stored in the storage device as the aggregation destination.

11. A content management program used in a content management apparatus that provides contents, the program causing a computer to execute the steps of:
selecting, from among a plurality of storage devices connected to the content management apparatus, a storage device as an aggregation destination to which identification information for identifying contents is aggregated;
aggregating and storing the identification information of the contents stored in the storage devices connected to the content management apparatus, into the storage device selected as the aggregation destination; and
providing a content corresponding to information selected from the identification information stored in the storage device as the aggregation destination.
